**Europäisches Patentamt**

**European Patent Office**

**Office européen des brevets**

(19)

(11) Veröffentlichungsnummer: **0 147 462 B1**

(12) **EUROPÄISCHE PATENTSCHRIFT**

(45) Veröffentlichungstag der Patentschrift:
**19.11.87**

(51) Int. Cl.⁴: **G 03 B 23/12**

(21) Anmeldenummer: **84902796.6**

(22) Anmeldetag: **04.07.84**

(86) Internationale Anmeldenummer:
**PCT/EP 84/00209**

(87) Internationale Veröffentlichungsnummer:
**WO 85/00436 (31.01.85 Gazette 85/3)**

(54) **PROJEKTIONSVORRICHTUNG FÜR DIAPOSITIVE UND VORRICHTUNG ZUR SPEICHERUNG VON MIT DER VORRICHTUNG VORZUFÜHRENDER DIAPOSITIVE.**

(30) Priorität: **04.07.83 GB 8318079**
**04.07.83 GB 8318081**

(43) Veröffentlichungstag der Anmeldung:
**10.07.85 Patentblatt 85/28**

(45) Bekanntmachung des Hinweises auf die Patenterteilung:
**19.11.87 Patentblatt 87/47**

(84) Benannte Vertragsstaaten:
**AT CH DE FR GB LI NL SE**

(56) Entgegenhaltungen:
**FR - A - 2 274 944**
**FR - A - 2 312 047**
**FR - A - 2 396 987**
**GB - A - 2 047 425**
**US - A - 4 034 540**

(73) Patentinhaber: **DRWIEGA, Bohdan, 56 Barnfield Road, London W5 1QT (GB)**

(72) Erfinder: **DRWIEGA, Bohdan, 56 Barnfield Road, London W5 1QT (GB)**

(74) Vertreter: **Walter, Helmut, Aubingerstrasse 81, D-8000 München 60 (DE)**

**Beschreibung**

Die vorliegende Erfindung geht aus von einem Projektionsgerät nach der DE-OS 2 914 833 und Möglichkeiten der Speicherung von Diapositiven gemäss der DE-PS 2 449 243.

Der vorliegenden Erfindung liegt die Aufgabe zugrunde, die vorbekannten Lösungen in der Weise auszugestalten, dass sie heutigen Anforderungen an kostengünstige Herstellung, einfache Betriebsweise und Betriebssicherheit in optimaler Weise entsprechen.

Die Merkmale der Erfindung ergeben sich in besonderer Weise aus den Patentansprüchen, und die Erfindung wird in der nachfolgenden Beschreibung der Zeichnung näher erläutert. Die beanspruchte Art der Speicherung von Diapositiven ist in besonderem Masse für das beanspruchte Projektionsgerät geeignet, obwohl sie auch dann geeignet ist, wenn das Projektionsgerät von dem beschriebenen und beanspruchten in angemessener Weise abweicht. In der beanspruchten Weise gespeicherte Diapositive können beispielsweise auch mit einem Projektor gemäss der vorgenannten DE-PS 2 449 243 auf einen Bildschirm projiziert werden.

In der Zeichnung zeigen

Fig. 1 in perspektivischer Darstellung eine Projektionsvorrichtung gemäss der Erfindung,

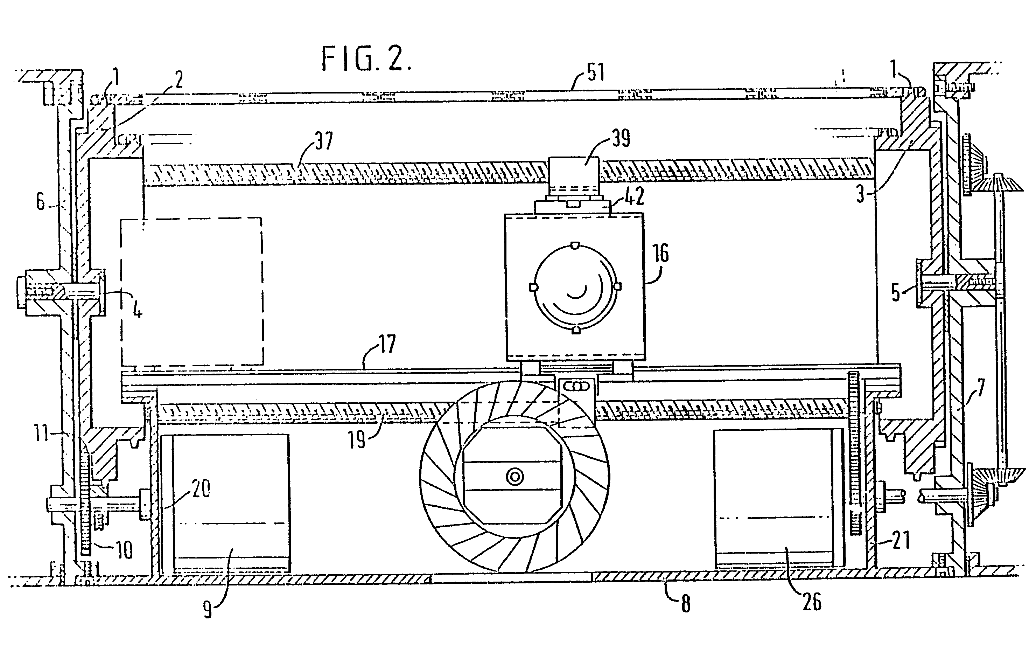

Fig. 2 die Ansicht der Vorrichtung gemäss Fig. 1 von hinten, im wesentlichen als Schnitt,

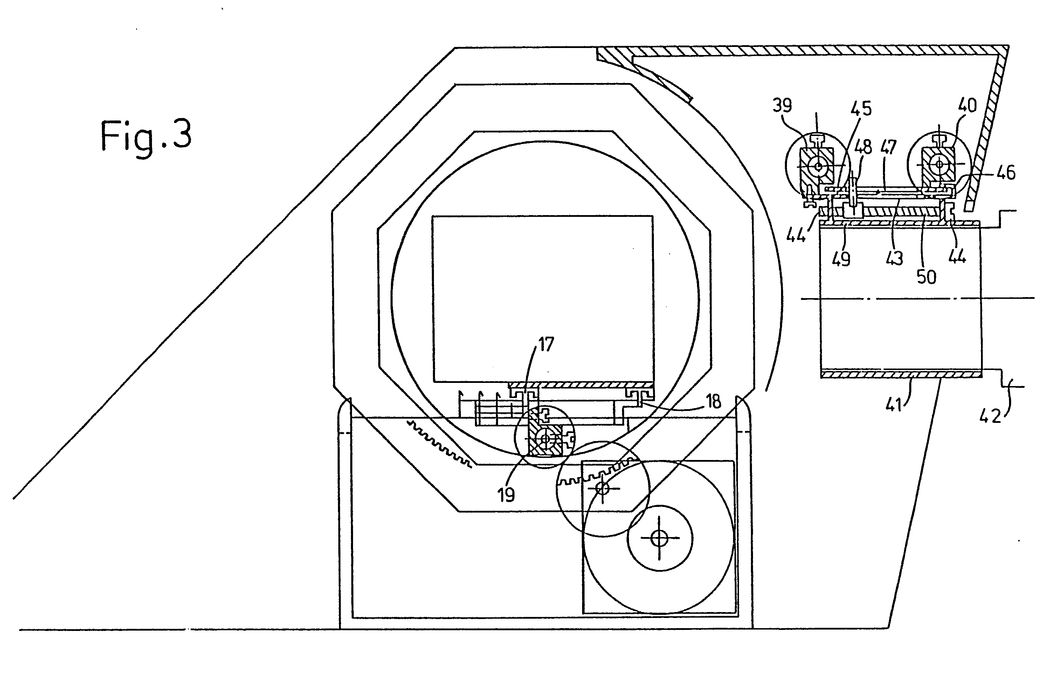

Fig. 3 die Vorrichtung gemäss Fig. 1, 2 auf die rechte Seite gesehen, im wesentlichen als Schnitt,

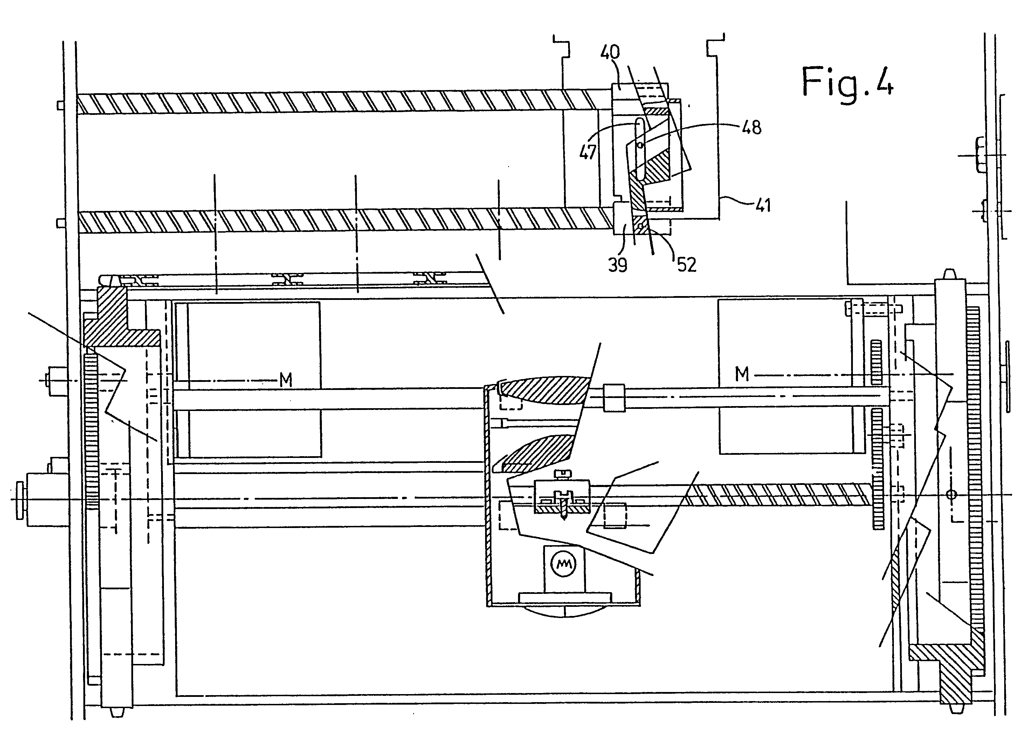

Fig. 4 eine Draufsicht auf die Vorrichtung gemäss Fig. 1 bis 3, im wesentlichen als Schnitt,

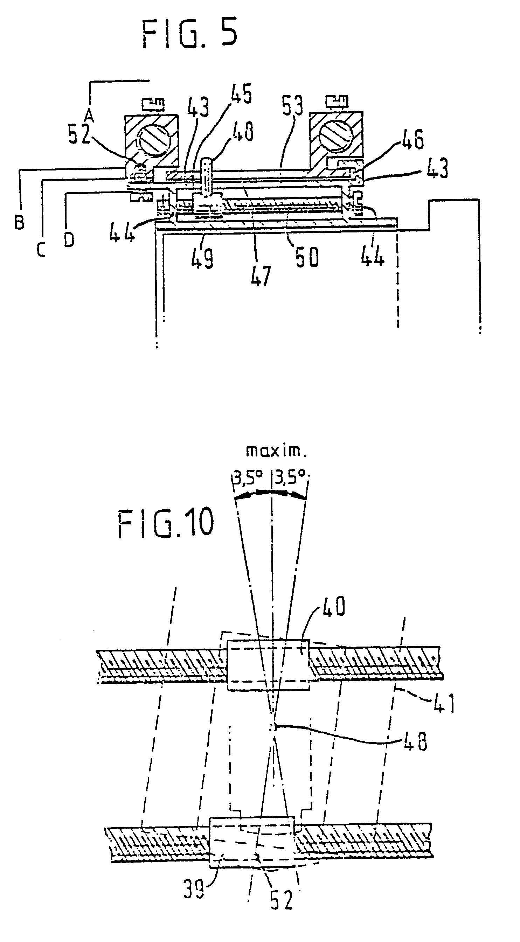

Fig. 5 das bei der Vorrichtung gemäss Fig. 1 bis 4 vorgesehene Linsengehäuse als Querschnitt und in gegenüber Fig. 1 bis 4 grösserer Darstellung,

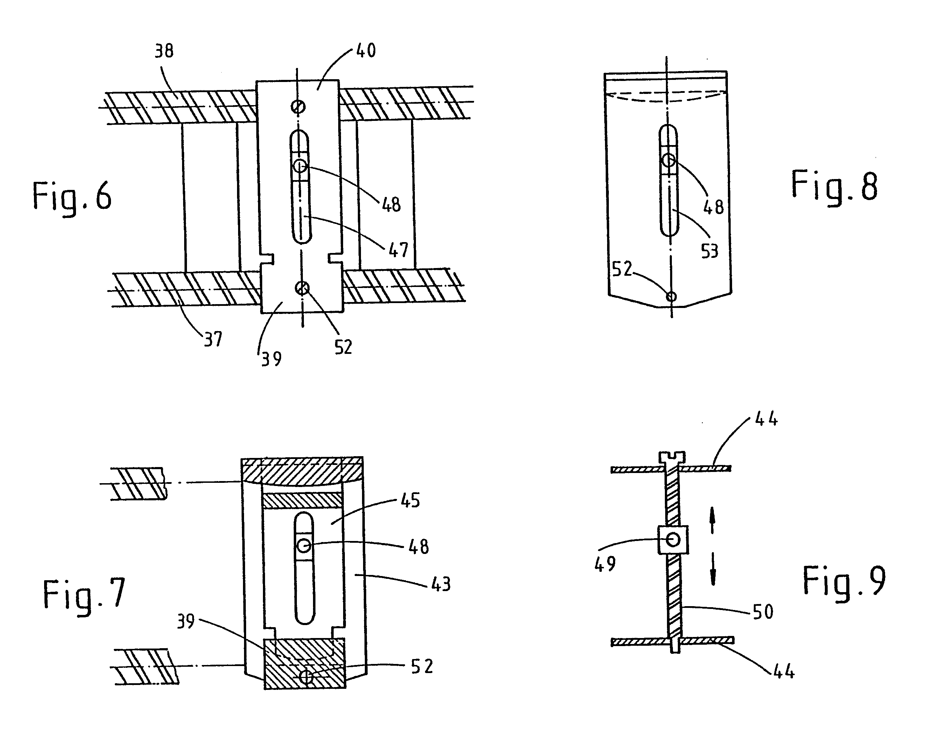

Fig. 6 die mit A in Fig. 5 gekennzeichnete Draufsicht auf die Anordnung der Fig. 5,

Fig. 7 bis 9 die in Fig. 5 mit B, C bzw D gekennzeichneten Schnitte des in Fig. 5 dargestellten Vorrichtungsteiles,

Fig. 10 eine schematische Draufsicht zur Erläuterung der Schwenkbarkeit des Linsengehäuses,

Fig. 11 bis 14 in schematischer Darstellung Ansichten einer anderen Ausführungsform der Erfindung, wobei der Erleichterung der Identifikation der einzelnen Ansichten Linienzüge A-A, B-B, C-C und D-D dienen,

Fig. 15 in schematischer Darstellung eine Draufsicht auf die andere Ausführungsform der Erfindung zur Erläuterung des bei dieser Ausführungsform vorgesehenen Seilantriebes für das Linsengehäuse,

Fig. 16 die in Fig. 15 dargestellte Anordnung auf das linke Ende gesehen,

Fig. 17 die in Fig. 15 dargestellte Anordnung als Stirnansicht zur Erläuterung der vorgesehenen Seiltrommeln,

Fig. 18 einen Teil eines aus einzelnen Streifen zusammengesetzten Bogens als erfindungsgemässe Vorrichtung zur Speicherung von Diapositiven, die mit Vorrichtungen gemäss Fig. 1 bis 17 vorzuführen sind,

Fig. 19 einen Vertikalschnitt nach der Linie II-II in Fig. 1,

Fig. 20, 21 Querschnitte nach den Linien III-III und IV-IV in Fig. 18,

Fig. 22 eine Einzelheit der Anordnung, nämlich ein Gelenk zwischen den einander zugeordneten Längsseiten zweier Streifen in grösserer und perspektivischer Darstellung,

Fig. 23 eine Draufsicht auf die Gelenkanordnung bei gemäss Fig. 18 miteinander verbundenen Streifen und

Fig. 24 eine Draufsicht auf eine Gelenkverbindung gemäss Fig. 22.

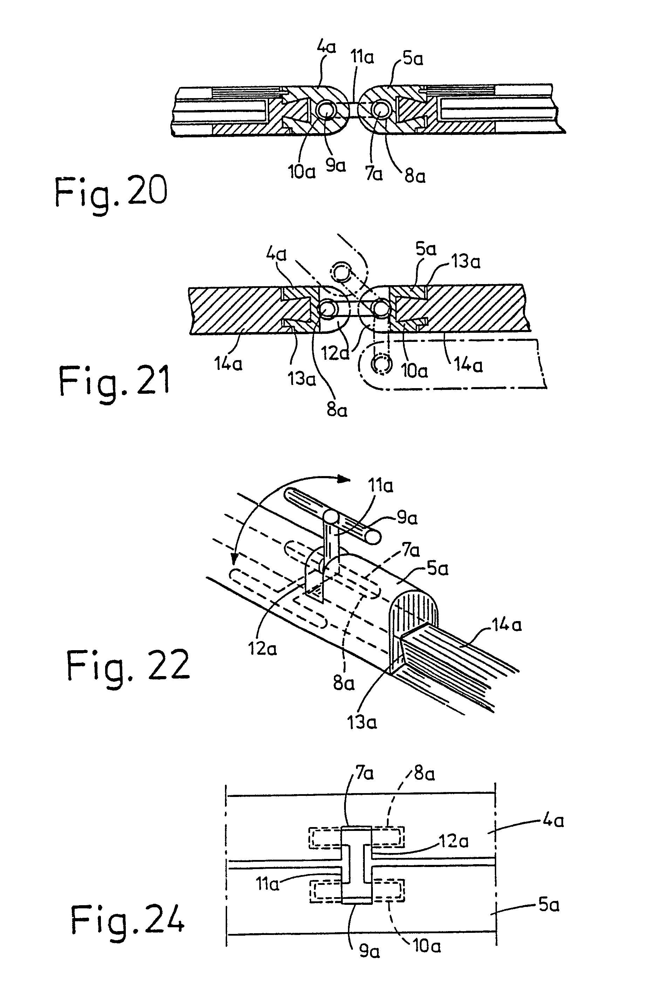

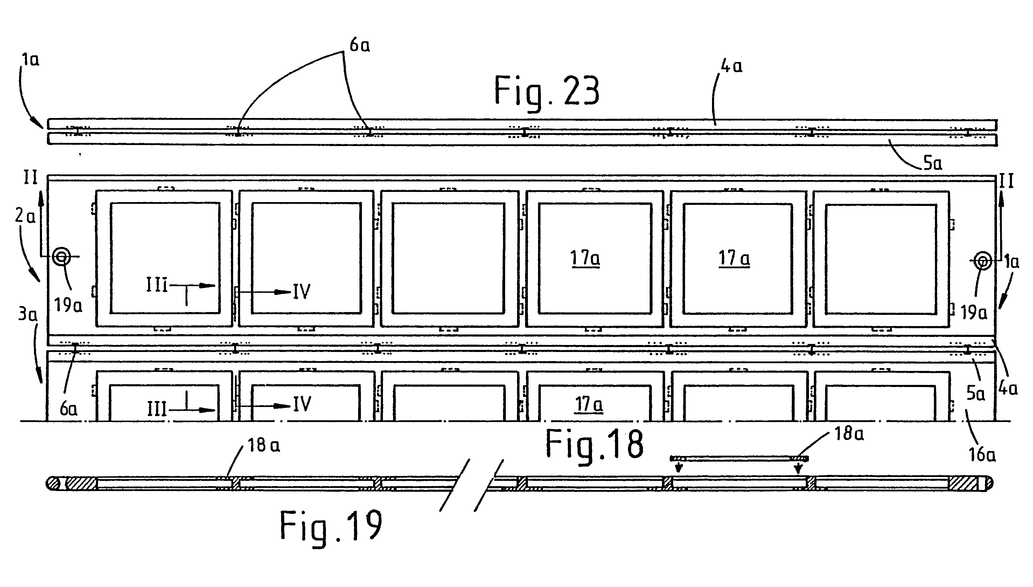

Die Projektionsvorrichtung gemäss der ersten Ausführungsform der Erfindung ist so ausgestaltet, dass sie Streifen gerahmter Diapositive aufzunehmen vermag, die gelenkig miteinander verbunden sind, um eine Kette zu bilden, deren gelenkig miteinander verbundenen Kettenglieder die gelenkig miteinander verbundenen Streifen gerahmter Diapositive bilden, wie es in Fig. 18 bis 24 dargestellt ist. An den beiden Enden weist jeder Streifen 2a, 3a ein Loch 19a auf, durch das ein Zapfen 1 zu treten vermag. Solche Zapfen 1 sind den Flächen zweier achtflächiger Förderköpfe 2, 3 zugeordnet, die mittels Zapfen 4 bzw. 5 drehbar in Endplatten 6, 7 gelagert sind, die wiederum auf einer Grundplatte 8 aufgesetzt sind. Der Förderkopf 2 ist um die Längsachse seines Zapfens 4 mittels eines Motors 9 antreibbar, der ein Zahnrad 10 antreibt, das mit einem Zahnrad 11 des Kopfes 1 zusammenwirkt. Die Drehung des Förderkopfes 2 wird mittels Zahnrädern 12, 13 auf den Förderkopf übertragen, die auf einer gemeinsamen Welle 14 drehfest angeordnet sind und von denen das Zahnrad 12 mit dem Zahnrad 11 und das Zahnrad 13 mit einem dem Zahnrad 11 entsprechenden Zahnrad 15 des Förderkopfes 3 zusammenwirkt.

Eine Lichtquelle 16 ist auf Schienen 17, 18 zwischen den Köpfen 2, 3 gleitend angeordnet. Der Bewegung der Lichtquelle 16 auf den Schienen 17, 18 zwischen den Köpfen 2, 3 dient eine an ihren Enden drehbar in Lagerschilden 20, 21 der Bodenplatte 8 gelagerte Gewindespindel 19, die mit einer Stellmutter 22 des Gehäuses der Lichtquelle zusammenwirkt. Die Gewindespindel 19 trägt nahe ihrem einen Ende ein Zahnrad 23, das von einem Zahnrad 24 auf der Welle 25 eines Motors 26 unter Zwischenschaltung eines Zahnrades 27 angetrieben wird, um die Gewindespindel in der gleich Umfangsrichtung anzutreiben, in der die Motorwelle 25 umläuft. Die Motorwelle 25 ist durch den Lagerschild 21 und die Endplatte 7 hindurchgeführt und am äusseren Ende mit einem Kegelrad 28 versehen, das mit einem Kegelrad 29 am unteren Ende einer Welle 30 zusammenwirkt, die in Lagern 31 an der Aussenseite der Endplatte 7 gelagert ist und die am oberen Ende ein Kegelrad 32 trägt, das mit einem drehbar in der Endplatte 7 gelagerten Kegelrad 33 zusammenwirkt. Das Kegelrad 33 ist einstückig mit einem Zahnrad 34 ausgeführt, das mit Zahnrädern 35, 36 zusammenwirkt, von denen je eines auf einer Gewindespindel 37, 38 befestigt ist, die an ihren Enden mit den Zahnrädern 35, 36 durch die Endplatte 7 hindurchgeführt sind und an ihren anderen Enden drehbar in der Endplatte 6 gelagert sind. Die Steigung des Gewindes der Gewindespindel 37 ist grösser als die Steigung des Gewindes der Gewindespindel 38. Auf jeder der Gewindespin-

deln 37, 38 ist eine Stellmutter 39 bzw. 40 gelagert, die dem oberen Ende des Gehäuses 41 einer optischen Linse 42 zugeordnet sind. Die Stellmutter 39 trägt einen Zapfen 52 am einen Ende einer Platte 43, die im Abstand von der Oberseite des Linsengehäuses 41 mittels Konsolen 44 angeordnet ist. Die Stellmutter 40 ist einstückig mit einem Schlitten 45 ausgeführt, der in horizontaler Ebene relativ gegenüber der Platte 43 in einer Führung 46 verstellbar ist, die von dem nach innen gebogenen Ende der Platte 43 gebildet wird. Der Schlitten 45 ist mit einem Schlitz 47 versehen, durch den ein Stift hindurchgeführt ist, der in entsprechender Weise durch einen Schlitz 53 in der Platte 43 hindurchgeführt ist und am unteren Ende mit einer Stellmutter 49 versehen ist, die auf einer Stellspindel 50 gelagert ist, die drehbar in Konsolen 44 gelagert ist, um den Abstand zwischen der Achse 48 des Stiftes und dem Zapfen 52 verändern zu können.

Die vorzuführenden Diapositive sind Seite an Seite in Taschen zu starren Streifen 51 — in Fig. 18 bis 24 mit 2a, 3a gekennzeichnet — zusammengefügt, die ihrerseits in geeigneter Zahl gelenkig miteinander verbunden sind, wozu Gelenke entlang den Längsseiten der Streifen angordnet sind, um jeweils zwei Streifen an zwei ihrer Längskanten gelenkig miteinander zu verbinden und so eine Kette aus einzelnen starren Streifen zu bilden, wie es im einzelnen in Fig. 18 bis 24 als vorzugsweise Ausführungsform beschrieben ist.

Für die Vorführung wird der erste Streifen der Streifenkette auf je eine Fläche der achtflächigen Förderköpfe 2, 3 aufgelegt, wobei die Zapfen 1 durch die Löcher an beiden Streifenenden hindurchtreten. Die Anordnung ist dabei so getroffen, dass der erste Streifen vertikal zwischen der Lichtquelle 16 und der Linse 42 des Objektives hängt und die nachfolgenden Streifen auf den nachfolgenden Flächen der Förderköpfe liegen. Ein Stapel von Streifen kann mit ziehharmonikaförmig aufeinanderligenden Streifen in einem ersten Magazin abgelegt sein, durch Drehen der Förderköpfe gelangen die Streifen nacheinander aus dem Magazin in den Bereich zwischen Lichtquelle und Linse, um danach einen Stapel mit ziehharmonikaartig aufeinanderliegenden Streifen in einem Ablagemagazin zu bilden.

Ehe das Projektionsgerät in Gang gesetzt wird, wird die Stellspindel 50 verstellt, um die Stellung des Stifts entsprechend dem Abstand des Bildschirmes von der Linse 42 einzustellen. Weiter ist für die Einstellung der erste Streifen 51 zwischen Lichtquelle 16 und Linse angeordnet. Der Motor 26 treibt nun die Stellspindeln 19, 37 und 38 an, um Lichtquelle und Linse in gleichen Schritten nacheinander vor bzw. hinter jedes Diapositiv einer Reihe zu bringen und die Diapositive nacheinander auf einem Bildschirm abzubilden. Während das Linsengehäuse 41 auf diese Weise nacheinander an den Diapositiven einer Reihe entlanggeführt wird, führt der unterschiedliche Einfluss der Stellspindeln 27, 38 auf die Stellmuttern 39, 40 zu einer rascheren Bewegung der Stellmutter 39 als die Stellmutter 40 bewegt wird. Auf diese Weise werden die Schwenkplatte 43 und das Gehäuse 41 relativ zu den Stellmuttern 39, 40 um die Längsachse 48 des Stifts verstellt, um so sicherzustellen dass alle Diapositive dieser Reihe in gleicher Grösse und Wiedergabequalität auf die selbe Stelle des Bildschirmes projiziert werden. Sind Lichtquelle und Linse an den Diapositiven einer Reihe entlanggeführt worden, so wird der Motor 9 angelassen, um die Köpfe 2, 3 um eine Teilung zu drehen und die nächste Reihe aus Diapositiven in den Bereich zwischen Lichtquelle und Linse zu bringen und nach Abstellen des Motors 9 und Anstellen des Motors 26 Lichtquelle und Linse in umgekehrter Richtung wie bei der vorhergehenden Diapositivreihe an der nächsten Diapositivreihe entlangzuführen und ein Diapositiv nach dem anderen auf den Bildschirm zu projizieren, wobei Lichtquelle und Linse in ihre Ausgangsposition zurückkehren, um für den nächsten Arbeitstakt bereitzustehen.

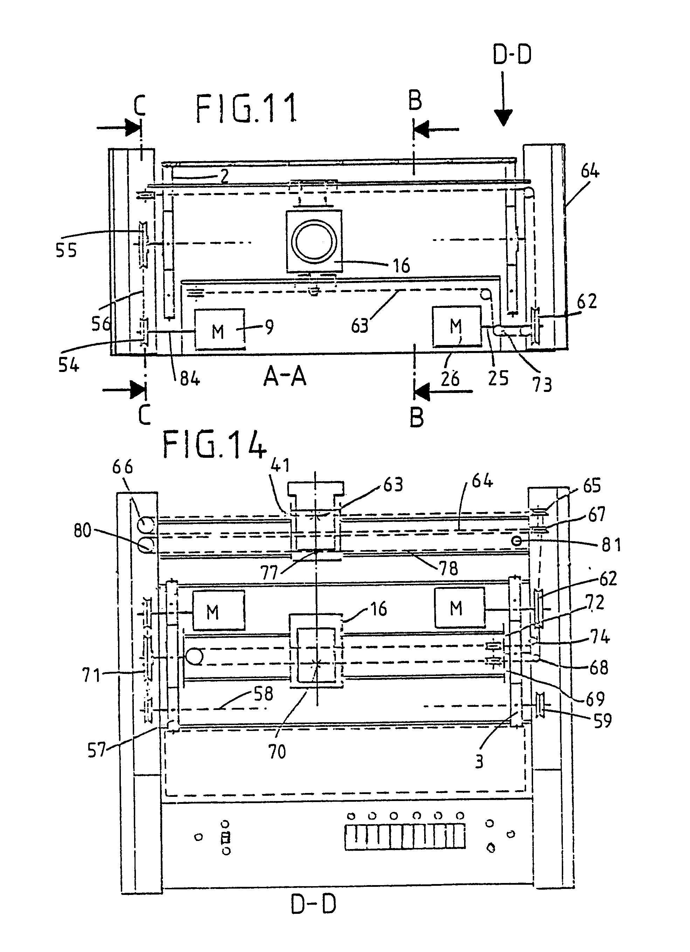

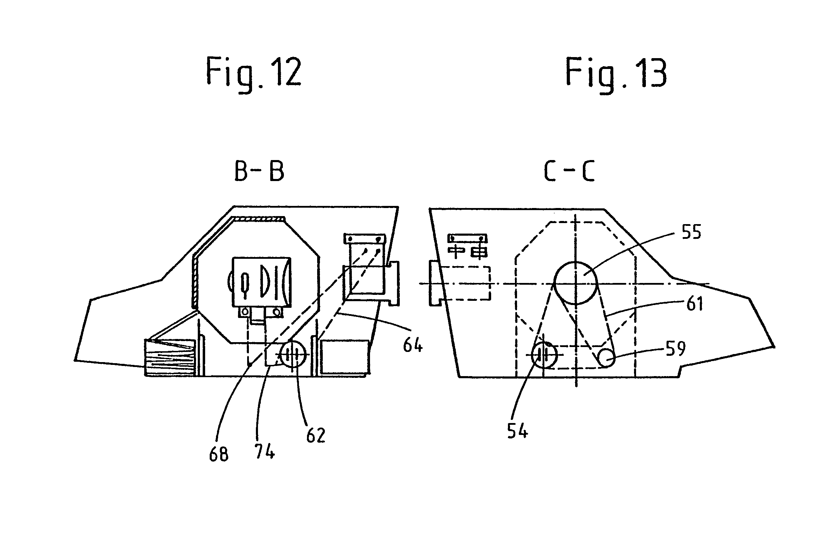

Bei der Ausführungsform gemäss Fig. 11 bis 14 sind die vorbeschriebenen Getriebe mit drehbaren Gewindespindeln und auf ihnen axial verstellbaren Stellmuttern durch Seilzüge bzw. Stellbänderantriebe ersetzt. In diesem Fall ist eine Seilrolle 54 auf der Welle 84 des Motors 9 angeordnet, um über ein Seil 56 oder dergleichen eine Seilrolle 55 des Kopfes 2 anzutreiben. In entsprechender Weise wird eine Seilrolle 57 am einen Ende einer Welle 58 angetrieben und eine Seilrolle 59 am anderen Ende der Weile 58 treibt mittels eines Seiles 61 oder dergleichen eine Seilrolle des Kopfes 3 an. Entsprechend ist eine Seilrolle 62 auf der Welle 25 des Motors 26 angeordnet und mittels eines Seiles 64 mit einem Punkt 63 des Linsengehäuses 41 verbunden, wobei das Seil 64 um Seilrollen 65, 66 und 67 im oberen Teil des Projektors und um Seilrollen 68 und 69 im unteren Teil des Projektors herum zu einem Fixpunkt 70 an der Unterseite der Lichtquelle 16 herumgeführt ist, ehe es über Seilrollen 71, 72, 73 und 74 zu der motorgetriebenen Seilrolle 62 zurückgeführt ist.

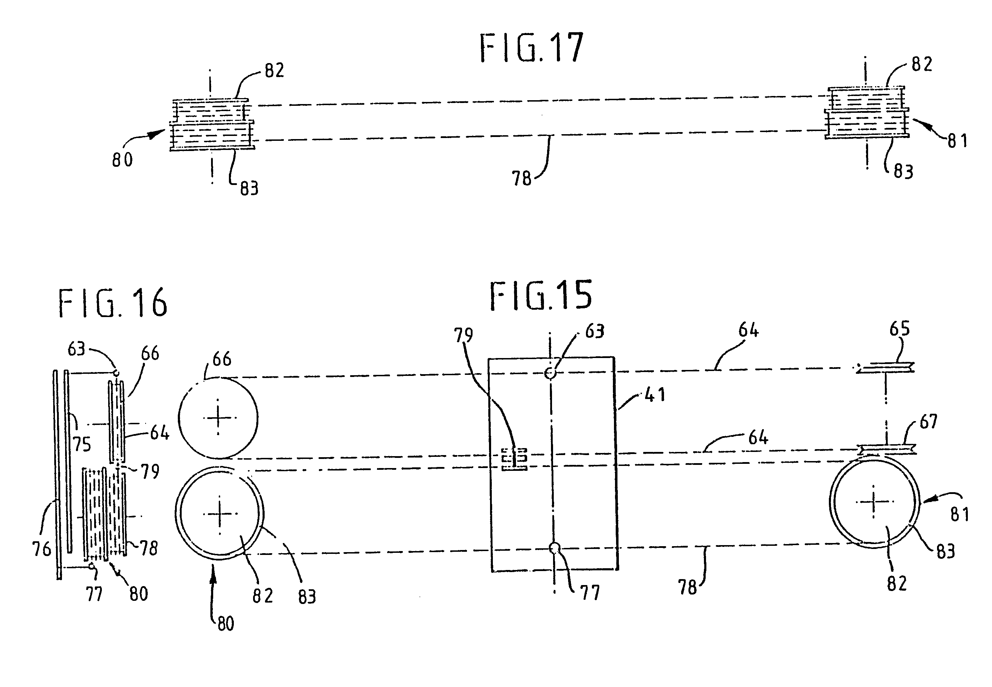

Wie in Fig. 15 bis 17 schematisch dargestellt ist, ist der Punkt 63, in dem das Seil 64 am Linsengehäuse befestigt ist, auf einer Platte 75 befestigt, die auf der Oberseite des Linsengehäuses angeordnet und diesem gegenüber bewegbar ist, wie es im wesentlichen auch bei der Platte 45 der ersten Ausführungsform der Fall ist und eine Platte 76, die der Platte 43 entspricht, ist am Linsengehäuse befestigt und bildet einen Verankerungspunkt 77 für ein weiteres Seil 78, das in Antriebsverbindung mit dem Seil 64 steht und zwischen Seilrollen 80 und 81 läuft. Jede der Seilrollen 80, 81 ist mit einer oberen Scheibe 82 versehen, deren Durchmesser in etwa dem der Seilrollen 65, 66 entspricht und mit einer unteren Scheibe 83, deren Durchmesser grösser ist als der der oberen Scheibe. Das Seil 78 ist von seiner Antriebsverbindung 79 mit dem Seil 64 aus um die Scheiben 82, 83 der Seilrolle 80 und um die Scheiben 83, 82 der Seilrolle 81 herumgeführt, ehe es zum Punkt 79 zurückgeführt ist.

Auf diese Weise wird bei laufendem Motor 9 das Seil 64 bewegt, um den Fixpunkt 63 auf der Platte 75 in Fig. 15 nach links zu bewegen, um mittels der Verbindung 79 das Seil 78 in einer Richtung zu verstellen, in der der Fixpunkt 77 auf der Platte 76 nach links zu bewegen ist, und die Differenz in den Durchmessern der Scheiben 82 und 83 veranlassen den Fixpunkt 77, sich schneller zu bewegen als den Fixpunkt 63, wobei dann der Linsenhalter um eine vertikale Achse schwenkt, um die Bewegung relativ zum Bildschirm zu bewegen, auf den die Diapositive projiziert werden.

Gemäss Fig. 18 bis 24 ist ein Bogen 1a aus mehreren Streifen zusammengesetzt, von denen der Einfachheit wegen lediglich zwei dargestellt und mit 2a und 3a bezeichnet sind. Jeder Streifen weist zwei parallele Seitenglieder 4a, 5a auf. An den einander zugekehrten Längskanten der einander zugeordneten Seitenglieder zweier aufeinanderfolgender Streifen sind diese gelenkig miteinander verbunden, wozu Verbindungselemente 6a in H-Form dienen. Jedes Verbindungselement 6a hat einen Arm 7a, der um seine Längsachse schwenkbar in einem Paar achsgleicher Bohrungen 8a in einem Seitenglied 5c des Steifens 2a gelagert ist. Der andere Arm 9a jedes Verbindungselementes 6a ist um seine Längsachse schwenkbar in einem Paar achsgleicher Bohrungen 10a im anderen Seitenglied 4a der beiden einander zugeordneten Seitenglieder aufeinanderfolgender Streifen gelagert. Beide Arme 7a und 9a jedes Verbindungselementes 6a sind durch einen Steg 11a miteinander verbunden. Der Steg ist winkelverstellbar um die Längsachse des Armes 7a oder des Armes 9a, und um das zu ermöglichen, ragt jeder Steg 11a durch ein Paar übereinstimmender Schlitze 12a, die sich in jedem Seitenglied 4a bzw. 5a von dessen Rand aus in den Verbindungsbereich zwischen den Bohrungspaaren 8a, 10a erstrecken und mit diesen in Verbindung stehen.

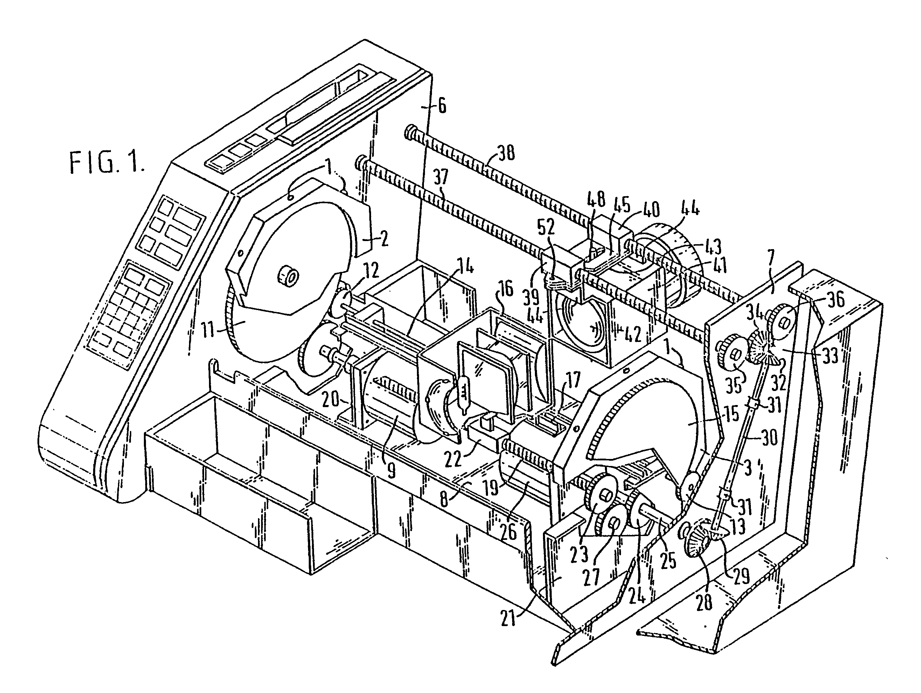

Die Verbindungselemente 6a ermöglichen es auf diese Weise den benachbarten Steifen 2a, 3a, relativ gegeneinander geschwenkt zu werden, um ziehharmonikaartig aufeinandergelegt zu werden, oder als Teile eines aus mehreren Streifen bestehenden Blattes nebeneinanderzuliegen. Liegen die Streifen ziehharmonikaartig aufeinander, so befinden sie sich insbesondere in einem der beiden Magazine der Fig. 1. Werden sie dem vor der Lichtquelle liegenden Magazin entnommen und aufgefaltet, so kann der erste Streifen mit den Löchern 19a an seinen Enden über die Zapfen 1 auf je einer Fläche beider Förderköpfe 2, 3 gestülpt werden, um auf diesen Flächen mit seinen Enden zur Auflage zu kommen. Werden die Förderköpfe 2, 3 gedreht, so werden die Diapositivstreifen wie bereits beschrieben, dem vorgenannten Magazin entnommen, durch den Bereich zwischen Linse 42 und Lichtquelle 16 hindurchgeführt und in dem anderen Magazin abgelegt, wobei sie erneut ziehharmonikaförmig aufeinandergelegt werden.

Die Innenflächen der Seitenglieder 4a, 5a jedes Streifens weisen eine durchgehende Längsnut 13a mit schwalbenschwanzförmigem Querschnitt auf, um einen entsprechend geformten Vorsprung 14a entlang der Längsseiten der in sich starren Streifenrahmen aufzunehmen, wobei der Einfachheit halber wiederum nur zwei dargestellt und mit 15a und 16a bezeichnet sind. Mittels dieser Ausgestaltung können die Gelenkverbindungen mit den Teilen 4a, 5a, 7a, 9a und 11a den Streifen zugeordnet oder von diesen getrennt werden. Jeder Streifen ist mit einer Reihe von umrandeten Aussparungen 17a zur Aufnahme eines Diapositives versehen, wobei die Diapositive mit Haltegliedern 18a in den Aussparungen gehalten sind.

Es ergibt sich aus der Ausgestaltung der Streifen und der Art ihrer Zusammenfügung, dass die Reihenfolge, in der die einzelnen Diapositivstreifen zur Vorführung gelangen, einfach und rasch verändert werden kann, indem die einzelnen Streifen untereinander oder gegen andere Streifen ausgetauscht werden können. In entsprechender Weise können in einfacher Weise Diapositive gegeneinander oder gegen andere Diapositive ausgewechselt werden.

## Patentansprüche

1. Vorrichtung für die Projektion von Diapositiven auf einen Bildschirm mit einer Lichtquelle auf der einen Diapositivseite und einer Linse auf der anderen Diapositivseite vor dem Bildschirm, wobei mehrere Diapositive quer zu der Projektionslinie von der Lichtquelle durch die Linse auf den Bildschirm eine Reihe bilden, entlang der Lichtquelle und Linse verstellbar sind, um ein Diapositiv nach dem anderen auf den Bildschirm zu projizieren, dadurch gekennzeichnet, dass die Lichtquelle (16) und die Linse (42) bei der Bewegung mittels jeweils eines eigenen Fördermittels (19 bzw. 37, 38) entlang der Diapositivreihe derart relativ zueinander verstellbar sind, dass in zumindest angenähert gleicher Bildwiedergabequalität die Diapositive der Reihe zumindest angenähert auf den gleichen Bildschirmbereich projiziert werden, wobei das Fördermittel (37, 38) der Linse (42) zwei parallel arbeitende Teile umfasst, die, in Richtung der Linie Lichtquelle (16) — Diapositiv — Linse (42) — Bildschirm gesehen, vor und hinter einer senkrechten Achse (48) angordnet und mit dem Gehäuse (41) der Linse (42) gekoppelt sind und unterschiedliche Fördergeschwindingkeiten haben, wodurch das Linsengehäuse (41) um die genannte Achse (48) verschwenkt wird.

2. Vorrichtung nach Anspruch 1, dadurch gekennzeichnet, dass beiden Fördermitteln (19 bzw. 37, 38) von Linse (42) und Lichtquelle (16) ein gemeinsamer Antrieb (26) zugeordnet ist, der über Verteilergetriebe (23, 24, 27, 28, 29, 32, 34, 35, 36) auf die beiden Fördermittel wirkt.

3. Vorrichtung nach Anspruch 1 oder 2, dadurch gekennzeichnet, dass das Linsengehäuse (41) einen Stift aufweist, der in der Richtung in der Projektionslinie Lichtquelle (16) — Diapositiv — Linse (42) — Bildschirm zwangsweise verstellbar ist.

4. Vorrichtung nach Anspruch 3, gekennzeichnet durch ein Getriebe (39, 40, 43, 45), das unterschiedliche translatorische Bewegungen von Getriebeteilen (39, 40) auf den beiden Teilen (37, 38) des Fördermittels des Linsengehäuses (41) in Schwenkbewegungen des Linsengehäuses (41) um die Längsachse (48) des Stiftes umwandelt.

5. Vorrichtung nach einem der Ansprüche 1 bis 4, dadurch gekennzeichnet, dass jedes Teil des Fördermittels des Linsengehäuses (41) eine Führungsstange (37, 38) aufweist, auf der eine Hülse (39, 40) verstellbar ist, wobei die Fördergeschwindigkeiten der Hülsen auf den Führungsstangen unterschiedlich sind.

6. Vorrichtung nach Anspruch 5, dadurch gekennzeichnet, dass die Führungsstangen Gewindestangen (37, 38) mit Gewinden unterschiedlicher Steigung sind, auf denen die als Gewindehülsen ausgebildeten Hülsen (35, 40) verstellbar sind.

7. Vorrichtung nach Anspruch 6, dadurch gekennzeichnet, dass an jeder Gewindehülse (39, 40) eine Platte (43, 45) mit ihrem einen Ende befestigt ist, die mit ihrem anderen Ende gegenüber der jeweils anderen Gewindehülse in Richtung der translatorischen Bewegung und in der gleichen Ebene in einer dazu senkrechten Richtung verstellbar ist, wobei die eine Platte (43) mit dem Linsengehäuse (41) verbunden ist und den Stift trägt, der durch eine Öffnung (47) in der anderen Platte (45) hindurchragt.

8. Vorrichtung nach Anspruch 7, dadurch gekennzeichnet, dass der Stift in der Ebene der translatorischen Verstellbewegung, jedoch senkrecht zu der Richtung der Verstellbewegung zusammen mit der ihn tragenden Platte (43) und dem Linsengehäuse (41) verstellbar ist und durch einen in dieser Richtung verlaufenden Längsschlitz (47) der anderen Platte (45) hindurchragt.

9. Vorrichtung nach Anspruch 8, dadurch gekennzeichnet, dass der Stift zur Erzielung der Verstellbewegung mit einer Gewindehülse (49) versehen ist, die auf einer Stellspindel (50) verstellbar gelagert ist, die drehbar aber axial unverstellbar am Linsengehäuse (41) gelagert ist.

10. Vorrichtung nach einem der Ansprüche 1 bis 9, dadurch gekennzeichnet, dass die Lichtquelle (16) auf Schienen (17) verstellbar ist mittels einer Gewindespindel (19), die drehbar, aber axial unverstellbar gelagert ist und durch eine in der Längsrichtung der Gewindespindel verstellbaren, der Lichquelle fest zugeordneten Gewindehülse (22) hindurchgeführt ist.

11. Vorrichtung nach den Ansprüchen 9 und 10, dadurch gekennzeichnet, dass ein Antriebsmotor (26) über ein Stirnradvorgelege (23, 24, 27) die Gewindespindel (19) für den Antrieb der Lichtquelle (16) und über ein, wie das Stirnradvorgelege von der Motorwelle (25) angetriebenes Kegelradvorgelege (28, 29, 32, 33) und Stirnräder (34, 35, 36) die Gewindespindeln (37, 38) für den Antrieb des Linsengehäuses (41) antreibt.

12. Vorrichtung nach Anspruch 11, dadurch gekennzeichnet, dass beide Enden der Gewindespindel (19) für den Antrieb der Lichtquelle (16) in Lagerschilden (20, 21) gelagert sind, zwischen denen der Antriebsmotor (26) angeordnet ist, wobei das Stirnradvorgelege (23, 24, 27) für den Antrieb der Gewindespindel (19) der Lichtquelle auf der Innenseite eines Lagerschildes (21) liegt, durch den die Motorwelle (25) hindurchgeführt ist, um das an der Aussenseite dieses Lagerschildes liegende Kegelradvorgelege (28, 29, 32, 33) anzutreiben.

13. Vorrichtung nach Anspruch 12, dadurch gekennzeichnet, dass die Motorwelle (25) durch eine von zwei Endplatten (6, 7) hindurchgeführt ist, in denen die Gewindespindeln (37, 38) für den Antrieb des Linsengehäuses (41) gelagert sind, wobei das Kegelradvorgelege (28, 29, 32, 33) an der Aussenseite der Endplatte (7) angeordnet ist, durch die die Motorwelle hindurchgeführt ist.

14. Vorrichtung nach Anspruch 13, dadurch gekennzeichnet, dass das Kegelradvorgelege (28, 29, 32, 33) über Stirnräder (35, 36) auf die Gewindespindeln (37, 38) des Antriebes des Linsengehäuses (41) einwirken, die ausserhalb der genannten Endplatte (7) auf Enden der Gewindespindeln angeordnet sind.

15. Vorrichtung nach Anspruch 13 oder 18, dadurch gekennzeichnet, dass zwischen den Endplatten (6, 7) in einem Abstand, der etwa der Länge der Diapositivreihe entspricht, Haltemittel (2, 3) für die Diapositivreihe angeordnet sind.

16. Vorrichtung nach Anspruch 15, dadurch gekennzeichnet, dass die Haltemittel (2, 3) schwenkbar sind, um die ausserhalb des Bereiches von Lichtquelle (16) und Linse (42) den Haltemitteln angeordnete Diapositivreihe durch Schwenken der Haltemittel in den Bereich zwischen Lichtquelle und Linse einbringen zu können.

17. Vorrichtung nach Anspruch 16, dadurch gekennzeichnet, dass die Haltemittel mehrflächige Förderköpfe (2, 3) sind, auf deren ausserhalb des Bereiches von Lichtquelle (16) und Linse (42) liegenden Flächen Reihen von Diapositiven aufzubringen sind, um durch Drehen der Förderköpfe in zwangsweiser Abhängigkeit voneinander nacheinander in den Bereich zwischen Lichtquelle und Linse eingebracht zu werden.

18. Vorrichtung nach Anspruch 17, dadurch gekennzeichnet, dass jede Fläche jedes Förderkopfes (2, 3) einen Zapfen (1) zur Aufnahme eines entsprechenden Loches an den Enden der Diapositivreihen aufweist.

19. Vorrichtung nach einem der Anprüche 17 und 18, dadurch gekennzeichnet, dass mehrere Reihen von Diapositiven gelenkig miteinander verbunden sind, um durch Drehen der Förderköpfe (2, 3) eine Kette von Diapositivreihen einem Magazin vor der Lichtquelle (16) zu entnehmen und nach dem Wiedergeben der Diapositive einer Reihe in einem Magazin hinter der Linse (42) abzulegen.

20. Vorrichtung nach Anspruch 1, dadurch gekennzeichnet, dass die beiden parallel arbeitenden Teile des Fördermittels des Linsengehäuses (41) zwei Seile bzw. Bänder (64, 78) sind, die auf Seiltrommeln (65, 66, 83) auf- bzw. von diesen abzuwickeln sind, die mit entsprechend unterschiedlichen Geschwindigkeiten angetrieben werden und an denen die Linse bzw. das Linsengehäuse befestigt ist.

21. Vorrichtung nach Anspruch 20, dadurch gekennzeichnet, dass auch die Lichtquelle mittels eines Seil- bzw. Bandantriebes verstellt wird.

22. Vorrichtung nach den Ansprüchen 16 bis 21, dadurch gekennzeichnet, dass auch die Förderköpfe mittels eines Seil- bzw. Bandantriebes angetrieben werden.

23. Vorrichtung nach Anspruch 19, gekennzeichnet durch Verbindungselemente (6a) zwischen zwei Streifen 2a, 3a für die Aufnahme von je einer Reihe von Diapositiven, die auf die Länge der Längskanten der Streifen verteilt sind und jeweils die Form eines «H» haben, wobei jeder der parallelen Arme (7a, 9a) um seine Längsachse drehbar in einem der Streifen gehalten ist und der Steg (11a) den Bereich zwischen den beiden Streifen überbrückt und sich dabei in den die notwendigen Bewegungen beim Falten der Streifen gegeneinander zulassenden Schlitzen (12a) befindet.

24. Vorrichtung nach Anspruch 23, dadurch gekennzeichnet, dass die Schlitze (12a) Bewegungen der Stege (11a) um etwa 180° zulassen.

25. Vorrichtung nach Anspruch 23 oder 24, dadurch gekennzeichnet, dass die Arme (7a, 9a) der Verbindungselemente (6a) in Seitengliedern (4a, 5a) gehalten sind, die mit Nuten (13a) über Vorsprünge (14a) der Streifen (2a, 3a) zu stülpen sind und durch Klemmwirkung auf diesen gehalten sind.

26. Vorrichtung nach Anspruch 25, dadurch gekennzeichnet, dass die Streifen (2a, 3a) zweiteilig ausgebildet sind, deren jeweils eines Teil den jeweiligen Vorsprung (14a) aufweist und taschenförmig zur Aufnahme der Diapositive ausgebildet ist und deren zweites Teil (18a) nach dem Einlegen der Diapositive in das erste Teil zum Halten der Diapositive einklemmbar ist.

27. Vorrichtung nach Anspruch 26, dadurch gekennzeichnet, dass das erste Teil so viele Taschen aufweist, wie es der Anzahl der eine Reihe bildenden Diapositive entspricht und dass das zweite Teil (18a) aus einer der Anzahl der Taschen entsprechenden Anzahl von einzelnen Deckeln besteht.

28. Vorrichtung nach Anspruch 26, dadurch gekennzeichnet, dass das erste Teil so viele Taschen aufweist, wie es der Anzahl der eine Reihe bildenden Diapositive entspricht und dass das zweite Teil (18a) ebenfalls einstückig und auf das erste Teil aufzudrücken ist.

29. Vorrichtung nach Anspruch 27 oder 28, dadurch gekennzeichnet, dass das zweite Teil Rahmen bildet, die jeweils eine der Grösse der Diapositive entsprechende Öffnung umschliessen.

**Claims**

1. Apparatus for the projection of transparencies on to a screen, comprising a light source on one side of the transparency and a lens on the other side of the transparency in front of the screen, a plurality of transparencies forming a row transversely of the projection line from the light source on to the screen through the lens, along which row the light source and the lens are displaceable in order to project transparencies on to the screen one after the other, characterised in that during the movement of the light source (16) and the lens (42) provided by their respective conveyor means (19 and 37, 38 respectively) along the row of transparencies the light source (16) and the lens (42) are so displaceable relatively to one another that the transparencies of the row are projected at least approximately on to the same zone of the screen in at least approximately the same image reproduction quality, the conveyor means (37, 38) for the lens (42) comprising two parts which operate in parallel and which, as viewed in the direction of the line extending from the light source (16) through the transparency and the lens (42), on to the screen, are disposed in front of and behind a vertical axis (48) and are coupled to the housing (41) of the lens (42) and have different speeds of conveyance so that the lens housing (41) is pivoted about the said axis (48).

2. Apparatus according to claim 1, characterised in that the two conveyor means (19 and 37, 38 respectively) of the lens (42) and the light source (16) have a common drive (26) which acts on the two conveyor means via a power divider gear (23, 24, 27, 28, 29, 32, 34, 35, 36).

3. Apparatus according to claim 1 or 2, characterised in that the lens housing (41) comprises a pin positively displaceable in the direction of the projection line from the light source (16), through the transparency and lens (42) to the screen.

4. Apparatus according to claim 3, characterised by a gear (39, 40, 43, 45) which converts different translatory movements of gear parts (39, 40) on the two parts (37, 38) of the conveyor means of the lens housing into pivoting movements of the lens housing (41) about the longitudinal axis (48) of the pin.

5. Apparatus according to any one of claims 1 to 4, characterised in that each part of the conveyor means of the lens housing (41) comprises a guide rod (37, 38) on which a sleeve (39, 40) is displaceable, the conveying speeds of the sleeves on the guide rods being different.

6. Apparatus according to claim 5, characterised in that the guide rods are screwthreaded rods (37, 38) with screwthreads of different pitches on which the sleeves (39, 40) constructed as screwthreaded sleeves are displaceable.

7. Apparatus according to claim 6, characterised in that a plate (43, 45) is secured by one end to each screwthreaded sleeve (39, 40), its other end being displaceable relatively to the respective other screwthreaded sleeve in the direction of the translatory movement and in the same plane in a direction perpendicular thereto, one plate (43) being connected to the lens housing (41) and bearing the pin which projects through an opening (47) in the other plate (45).

8. Apparatus according to claim 7, characterised in that the pin is displaceable in the plane of the translatory displacement movement but perpendicularly to the direction of the displacement movement together with the plate (43) carrying it and the lens housing (41) and projects through a slot (47) extending in this direction in the other plate (45).

9. Apparatus according to claim 8, characterised in that the pin is provided with a screwthreaded sleeve (49) to produce the displacement movement, said screwthreaded sleeve (49) being displaceably mounted on an adjusting spindle (50) which is mounted on the lens housing (41) to be rotatable but axially nondisplaceable.

10. Apparatus according to any one of claims 1 to 9, characterised in that the light source (16) is displaceable on rails (17) by means of a screwthreaded spindle (19) which is mounted to be rotatable but axially non-displaceable and extends through a screwthreaded sleeve (22) which is displaceable in the longitudinal direction of the screwthreaded spindle and which is fixedly associated with the light source.

11. Apparatus according to claims 9 and 10, characterised in that a drive motor (26) drives the screwthreaded spindle (19) for the drive for the light source (16) via an intermediate spur gearing (23, 24, 27), and the screwthreaded spindles (37, 38) for the drive for the lens housing (41) via an intermediate bevel gear (28, 29, 32, 33) driven from the motor shaft (25) like the intermediate spur gear, and via spur gears (34, 35, 36).

12. Apparatus according to claim 11, characterised in that the two ends of the screwthreaded spindle (19) for the drive for the light source (16) are mounted in bearing plates (20, 21) between which the drive motor (26) is disposed, the intermediate spur gear (23, 24, 27) for the drive for the screwthreaded spindle (19) for the light source being located on the inside of a bearing plate (21) through which the motor shaft (25) is passed to drive the intermediate bevel gear (28, 29, 32, 33) located on the outside of this bearing plate.

13. Apparatus according to claim 12, characterised in that the motor shaft (25) is passed through one of two end plates (6, 7) in which the screwthreaded spindles (37, 38) for the drive for the lens housing (41) are mounted, the intermediate bevel gear (28, 29, 32, 33) being disposed on the outside of the end plate (7) through which the motor shaft is passed.

14. Apparatus according to claim 13, characterised in that the intermediate bevel gear (28, 29, 32, 33) acts via spur gears (35, 36) on the screwthreaded spindles (37, 38) of the drive for the lens housing (41) which are disposed outside the said end plate (7) on ends of the screwthreaded spindles.

15. Apparatus according to claim 13 or 18, characterised in that retaining means (2, 3) for the row of transparencies are disposed between the end plates (6, 7) at a distance corresponding approximately to the length of the row of transparencies.

16. Apparatus according to claim 15, characterised in that the retaining means (2, 3) are pivotable to enable the row of transparencies disposed on the retaining means outside the zone of the light source (16) and the lens (42) to be brought into the zone between the light source and lens by pivoting of the retaining means.

17. Apparatus according to claim 16, characterised in that the retaining means are multi-surface conveyor heads (2, 3) on whose surface situated outside the zone of the light source (16) and lens (42) rows of transparencies can be disposed so that they can be brought successively into the zone between the light source and the lens by rotation of the conveyor heads in positive dependence on one another.

18. Apparatus according to claim 17, characterised in that the surface of each conveyor head (2, 3) has a stud (1) to receive a corresponding hole at the ends of the rows of transparencies.

19. Apparatus according to claim 17 or 18, characterised in that a plurality of rows of transparencies are pivotally interconnected so that rotation of the conveyor heads (2, 3) enables a chain of rows of transparencies to be taken from a magazine in front of the light source (16) and, after reproduction of the transparencies of a row, to be disposed in a magazine behind the lens (42).

20. Apparatus according to claim 1, characterised in that the two parts of the conveyor means of the lens housing (41) which operate in parallel comprise two cables or belts (64, 78) which are wound on and paid off cable drums (65, 66, 83) which are driven at appropriately different speeds and on which the lens and lens housing are secured.

21. Apparatus according to claim 20, characterised in that the light source is also displaced by means of a cable or belt drive.

22. Apparatus according to claims 16 to 21, characterised in that the conveyor heads are also driven by means of a cable or belt drive.

23. Apparatus according to claim 19, characterised by connecting elements (6a) between two strips (2a, 3a) each to receive a row of transparencies distributed over the length of the longitudinal edges of the strips and each having the form of a «H», each of the parallel arms (7a, 9a) being held in one of the strips for rotation about its longitudinal axis and the web (11a) bridging the zone between the two strips and in these conditions being situated in the slots (12a) which allow the necessary movements during the folding of the strips relatively to one another.

24. Apparatus according to claim 23, characterised in that the slots (12a) permit movements of the webs (11a) through about 180°.

25. Apparatus according to claim 23 or 24, characterised in that the arms (7a, 9a) of the connecting elements (6a) are held in side members (4a, 5a) inverted with grooves (13a) over projections (14a) of the strips (2a, 3a) and being held thereon by a clamping action.

26. Apparatus according to claim 25, characterised in that the strips (2a, 3a) are of two-part construction, one part having the projection (14a) and being of pocket-shaped construction to receive the transparencies while the second part (18a) is adapted to be clamped on the first part, after introduction of the transparencies, in order to retain the latter.

27. Apparatus according to claim 26, characterised in that the first part has a number of pockets equal to the number of transparencies forming one row and the second part (18a) consists of a number of individual covers corresponding to the number of pockets.

28. Apparatus according to claim 26, characterised in that the first part has a number of pockets equal to the number of transparencies forming one row and the second part (18a) is also of one-piece construction and is adapted to be pressed on to the first part.

29. Apparatus according to claim 27 or 28, characterised in that the second part forms frames each enclosing an opening corresponding to the size of the transparencies.

**Revendications**

1. Dispositif pour la projection de diapositives sur un écran comportant une source de lumière disposée d'un côté de la diapositive et une lentille disposée de l'autre côté de la diapositive devant l'écran, plusieurs diapositives formant une série disposée perpendiculairement à la ligne de projection allant de la source de lumière vers l'écran à tranves la lentille, et étant disposées avec possibilité de déplacement le long de la source de lumière et de la lentille, en vue de projeter les diapositives l'une après l'autre sur l'écran, caractérisé en ce que la source de lumière (16) et la lentille (42) sont disposées avec possibilité de déplacement l'une par rapport à l'autre lors du mouvement au moyen d'un moyen d'avancement propre pour chacune (19, respectivement, 37, 38) le long de la série de diapositives de telle manière que l'on projette les diapositives avec au moins approximativement la même qualité de reproduction sur au moins approximativement la même zone de l'écran, le moyen d'avancement (37, 38) de la lentille (42) comprenant deux parties travaillant parallèlement qui, lorsque l'on regarde dans la direction d'une ligne source de lumière (16) — diapositive — lentille (42) — écran, sont disposées devant et derrière un axe vertical (48) et sont couplées avec le boîtier (41) de la lentille (42) et qui présentent des vitesses d'avancement différentes, grâce à quoi le boîtier de lentille (41) est pivoté autour dudit axe (48).

2. Dispositif selon la revendication 1, caractérisé en ce qu'il est adjoint un entraînement commun (26) aux deux moyens d'avancement (19, respectivement, 37, 38) de la lentille (42) et de la source de lumière (16), ledit entraînement commun agissant sur les deux moyens d'avancement par l'intermédiaire d'un engrenage distributeur (23, 24, 27, 28, 29, 32, 34, 35, 36).

3. Dispositif selon la revendication 1 ou 2, caractérisé en ce que le boîtier de lentille (41) présente une tige qui est montée à déplacement forcé dans la direction de la ligne de projection source de lumière (16) — diapositive — lentille (42) — écran.

4. Dispositif selon la revendication 3, caractérisé par un engrenage (39, 40, 43, 45) qui transforme des mouvements de translation différents d'éléments d'engrenage (39, 40) se trouvant sur les deux parties (37, 38) du moyen d'avancement du boîtier de lentille (41) en mouvements de rotation du boîtier de lentille (41) autour de l'axe longitudinal (48) de la broche.

5. Dispositif selon d'une des revendications 1 à 4, caractérisé en ce que chaque partie du moyen d'avancement du boîtier de lentille (41) comporte une barre de guidage (37, 38) sur laquelle une douille (39, 40) est montée à déplacement, les vitesses d'avancement des douilles sur les barres de guidage étant différentes.

6. Dispositif selon la revendication 5, caractérisé en ce que les barres de guidage sont des barres filetées (37, 38) présentant des filetages de pas différents et sur lesquelles les douilles (39, 40) constituées sous forme de douille filetées sont disposées à déplacement.

7. Dispositif selon la revendication 6, caractérisé en ce que sur chaque douille filetée (39, 40), une plaque (43, 45) est fixée par une de ses extrémités, ladite plaque étant disposée à déplacement par son autre extrémité par rapport à l'autre douille filetée dans la direction du déplacement en translation et dans le même plan dans une direction perpendiculaire, l'une des plaques (43) étant reliée avec le boîtier de lentille (41) et portant la tige qui fait saillie à travers une ouverture (47) aménagée dans l'autre plaque (45).

8. Dispositif selon la revendication 7, caractérisé en ce que la tige est disposée à déplacement dans le plan du mouvement du déplacement en translation, mais perpendiculairement à la direction du mouvement de déplacement, en étant liée avec la plaque (43) qui la porte et le boîtier de lentille (41) et en ce que la tige fait saillie en traversant une fente longitudinale (47) de l'autre plaque (45), ladite fente s'étentant dans cette direction.

9. Dispositif selon la revendication 8, caractérisé en ce que en vue d'obtenir le mouvement de déplacement, la tige est munie d'une douille filetée (49) qui est montée à déplacement sur une broche de réglage (50) qui est montée à rotation mais avec possibilité de déplacement axial sur le boîtier de lentille (41).

10. Dispositif selon l'une des revendications 1 à 9, caractérisé en se que la source de lumière (16) est disposée à déplacement sur des rails (17), au moyen d'une broche filetée (19) qui est montée à rotation mais sans possibilité de déplacement axial, et y est guidée par l'intermédiaire d'une douille filetée (22) disposée à déplacement selon la direction longitudinale de la broche filetée et associée de manière fixe à la source de lumière.

11. Dispositif selon les revendications 9 et 10, caractérisé en ce qu'un moteur d'entraînement (26) entraîne, par l'intermédiaire d'un renvoi à pignons droits (23, 24, 27), la broche filetée (19) en vue de l'entraînement de la source de lumière (16) et, par l'intermédiaire d'un renvoi à pignons coniques (28, 29, 32, 33) qui est entraîné, comme le renvoi à engrenage droit, par l'arbre (25) du moteur, et de pignons droits (34, 35, 36), les broches filetées (37, 38) en vue de l'entraînement du boîtier de lentille (41).

12. Dispositif selon la revendication 11, caractérisé en ce que en vue de l'entraînement de la source de lumière (16), les deux extrémités de la broche filetée (19) sont montées dans des plaques (20, 21) entre lesquelles le moteur d'entraînement (26) est disposé, le renvoi à pignons droits (23, 27) destiné à l'entraînement de la broche filetée (19) de la source de lumière reposant sur la face intérieure d'un flaque (21) par l'intermédiaire duquel l'arbre (25) du moteur est guidé, afin d'entraîner le renvoi à pignons coniques (28, 29, 32, 33) reposant sur la face extérieure de ce flaque.

13. Dispositif selon la revendication 12, caractérisé en ce que l'arbre du moteur (25) est guidé par l'une de deux plaques terminales (6, 7) dans lesquelles les axes filetés (37, 38) destinés à l'entraînement du boîtier de lentille (41) sont montés, le renvoi à pignons coniques (28, 29, 32, 33) étant disposé sur la face extérieure de la plaque terminale (7) par l'intermédiaire de laquelle l'arbre du moteur est guidé.

14. Dispositif selon la revendication 13, caractérisé en ce que le renvoi à pignons coniques (28, 29,

32) agit sur des pignons droits (35, 36) disposés sur les broches filetées (37, 38) de l'entraînement du boîtier de lentille (41), lesdits pignons droits étant disposés à l'extérieur de ladite plaque terminale (7) sur des extrémités des tiges filetées.

15. Dispositif selon la revendications 13 ou 14, caractérisé en ce que, entre les plaques terminales (6, 7) sont disposés des moyens de maintien (2, 3) pour la série de diapositives à une distance qui correspond approximativement à la longueur de la série de diapositives.

16. Dispositif selon la revendication 15, caractérisé en ce que les moyens de maintien (2, 3) sont montés à rotation afin de pouvoir introduire la série de diapositives disposée sur les moyens de maintien à l'extérieur de la zone de la source de lumière (16) de la lentille (42) dans la zone se trouvant entre la source de lumière et la lentille par pivotement des moyens de maintien.

17. Dispositif selon la revendication 16, caractérisé en ce que les moyens de maintien sont constitués par des têtes d'avancement (2, 3) à plusieurs faces, des séries de diapositives devant être amenées sur les faces desdites têtes se trouvant à l'extérieur de la zone de la source de lumière (16) et de la lentille (42) pour être introduites dans la zone se trouvant entre la source de lumière et la lentille par rotation des têtes d'avancement en dépendance relative imposée les unes après les autres.

18. Dispositif selon la revendication 17, caractérisé en ce que chaque tête d'avancement (2, 3) présente un têton (1) destiné à l'engagement avec un trou correspondant disposé sur les extrémités des séries de diapositives.

19. Dispositif selon l'une des revendications 17 et 18, caractérisé en ce que plusieurs séries de diapositives sont reliées l'une avec l'autre à articulation par rotation des têtes d'avancement (2, 3), pour enlever une chaîne de séries de diapositives d'un magasin devant la source de lumière et la déposer dans un magasin se trouvant derrière la lentille (42) après reproduction de la diapositive d'une série.

20. Dispositif selon la revendication 1, caractérisé en ce que les deux parties travaillant parallèlement du moyen d'avancement du boîtier de lentille (41) sont constituées par deux cordes ou bandes (64, 78) qui doivent être enroulées ou déroulées sur des tambours (65, 66, 83) qui sont entraînes avec des vitesses différentes en correspondance et sur lesquelles la lentille ou le boîtier de lentille est fixé.

21. Dispositif selon la revendication 20, caractérisé en ce que la source de lumière est également déplacée au moyen d'un entraînement à corde ou à bande.

22. Dispositif selon les revendications 16 à 21, caractérisé en ce que les têtes d'avancement sont également au moyen d'un entraînement à corde ou à bande.

23. Dispositif selon la revendication 19, caractérisé par des éléments de liaisons (6a) disposés entre deux bandes (2a, 3a) en vue de la réception à chaque fois d'une série de diapositives qui sont réparties sur la longueur des arêtes longitudinales des bandes et présentent à chaque fois la forme d'un «H», dont chacun des jambages parallèles (7a, 9a) est maintenu à rotation autour de son axe longitudinal dans une des bandes et la barre (11a) pontant la zone existant entre les deux bandes et se trouvant ainsi dans les fentes (12a) permettant des mouvements mutuels nécessaires lors du pliage des bandes.

24. Dispositif selon la revendication 23, caractérisé en ce que des fentes (12a) permettent des mouvements des jambages (11a) sur environ 180°.

25. Dispositif selon la revendication 23 ou 24, caractérisé en ce que les jambages (7a, 9a) des éléments de liaison (6a) sont maintenus dans des éléments latéraux (4a, 5a) qui doivent être engagés sur des saillies (14a) des bandes (2a, 3a) au moyen d'encoches (13a) et sont maintenus sur celles-ci par effet de coincement.

26. Dispositif selon la revendication 25, caractérisé en ce que les bandes (2a, 3a) sont constituées de deux parties dont une partie présente la saillie correspondante (14a) et est conformée en forme de poche pour recevoir la diapositive et dont la deuxième partie peut être coincée dans la première partie après la mise en place de la diapositive pour maintenir la diapositive.

27. Dispositif selon la revendication 26, caractérisé en ce que la première partie présente un nombre de poches qui correspond au nombre des diapositives formant une série et en ce que la deuxième partie (18a) est constituée de couvercles individuels dont le nombre correspond au nombre des poches.

28. Dispositif selon la revendication 26, caractérisé en ce que la première partie comporte un nombre de poches qui correspond au nombre des diapositives constituant une série et en ce que la deuxième partie (18a) est également en une seule pièce et doit être engagée par pression sur la première partie.

29. Dispositif selon la revendication 27 ou 28, caractérisé en ce que la deuxième partie constitue des cadres qui enferment à chaque fois une ouverture correspondant à la grandeur des diapositives.

FIG.1.

FIG.2.

Fig.3

Fig.4

40

48

47

41

39    52

M

M

17

0 147 462

# FIG. 5

A

52   43   45   53   48   46   43

B   C   D   44   49   47   50   44

maxim.

3,5°   3,5°

# FIG.10

40

41

48

39   52

Fig.6

38 40 48 47 37 39 52

Fig.8

48 53 52

Fig.7

45 48 43 39 52

Fig.9

44 49 50 44

# FIG.11

D-D

C · · · · B

A-A

55

56

54

84

16

9

63

26

25

73

64

62

# FIG.14

66

41

63

64

65

80

67

81

77

78

62

72

16

74

68

69

71

58

59

57

70

3

D-D

# Fig. 12

## B-B

64

68  74

62

# Fig. 13

## C-C

55

61

59

54

# FIG.17

# FIG.16

# FIG.15

0 147 462

Fig. 20

Fig. 21

Fig. 22

Fig. 24

Fig. 23

Fig. 18

Fig. 19